# EUROPÄISCHE PATENTANMELDUNG

(11) **EP 2 367 401 A2**
(43) Veröffentlichungstag der Anmeldung: **21.09.2011**
(21) Anmeldenummer: 11002102.9
(22) Anmeldetag: 14.03.2011
(51) Int. Cl.: H05B 37/02, H05B 33/08

(54) **Vorrichtung mit einem Leuchtmittel und Verfahren zu dessen Steuerung**

(30) Priorität: 15.03.2010 DE 102010011408
(71) Anmelder: Schneider Electric Industries SAS, 92500 Rueil-Malmaison (FR)
(72) Erfinder: Kuhnert, Jürgen, 51702 Bergneustadt (DE)
(74) Vertreter: Manitz, Finsterwald & Partner GbR

(57) **Zusammenfassung**

Die vorliegende Erfindung betrifft eine Vorrichtung mit einem Leuchtmittel zur Ausstrahlung von Licht in einen Raumbereich, einer Erfassungseinrichtung zur Erfassung der Charakteristik vorhandenen Lichts an wenigstens einem Ort und eine mit der Erfassungseinrichtung verbundene Steuereinheit zur Steuerung des Leuchtmittels in Abhängigkeit von der erfassten Lichtcharakteristik.

## Beschreibung

Die vorliegende Erfindung betrifft eine Vorrichtung mit einem Leuchtmittel zur kontinuierlichen Ausstrahlung von Licht in einen Raumbereich sowie ein Verfahren zum Steuern eines solchen Leuchtmittels.

Vorrichtungen mit einem oder mehreren Leuchtmitteln zur kontinuierlichen Ausleuchtung von Raumbereichen, z.B. mit Glühlampen, Halogenlampen oder Leuchtstoffröhren, sind grundsätzlich bekannt. Bekannt ist auch eine Vorrichtung, bei der ein Leuchtmittel ein Messmodul zur Bestimmung der von dem Leuchtmittel abgegebenen Lichtleistung umfasst.

Mit den bekannten Vorrichtungen können in einem Raumbereich nicht immer die gewünschten Lichtverhältnisse hergestellt werden, da beispielsweise in den Raumbereich einstrahlendes Tageslicht natürlichen Schwankungen unterworfen ist oder sich die Leuchteigenschaften des Leuchtmittels alters- oder temperaturbedingt verändern können.

Der vorliegenden Erfindung liegt die Aufgabe zugrunde, eine Vorrichtung und ein Verfahren zu schaffen, mittels derer in einem Raumbereich jederzeit gewünschte Lichtverhältnisse hergestellt werden können.

Zur Lösung dieser Aufgabe sind eine Vorrichtung mit den Merkmalen des Anspruchs 1 sowie ein Verfahren mit den Merkmalen des Anspruchs 13 vorgesehen.

Die erfindungsgemäße Vorrichtung umfasst ein Leuchtmittel zur kontinuierlichen Ausstrahlung von Licht in einen Raumbereich, eine Erfassungseinrichtung zur Erfassung der Charakteristik vorhandenen Lichts an wenigstens einem Ort und eine mit der Erfassungseinrichtung verbundene Steuereinheit zur Steuerung des Leuchtmittels in Abhängigkeit von der erfassten Lichtcharakteristik.

Der Erfindung liegt der allgemeine Gedanke zugrunde, an wenigstens einem Ort die dort herrschenden tatsächlichen Lichtverhältnisse zu bestimmen und das Leuchtmittel, z.B. einer Schreibtisch-, Wand- oder Deckenbeleuchtung, dann in Abhängigkeit von diesen tatsächlichen Lichtverhältnissen zu steuern, insbesondere so, dass sich gewünschte Lichtverhältnisse einstellen.

Der wenigstens eine Ort kann dabei einer von mehreren definierten Raumpunkten sein und beispielsweise in dem Leuchtmittel, in der Nähe des Leuchtmittels oder von dem Leuchtmittel entfernt liegen, beispielsweise an einer dem Tageslicht zugewandten Stelle, wie z.B. in der Nähe eines Fensters.

Unter der Erfassung der Charakteristik des vorhandenen Lichts ist hier die Erfassung der Helligkeit und/oder des Spektrums des Lichts zu verstehen. Dabei bedeutet die Erfassung des Lichtspektrums in diesem Kontext die Erfassung der Lichtintensität als Funktion der Wellenlänge oder, anders gesagt, die Erfassung der spektralen Helligkeitsverteilung des Lichts.

Mit Hilfe der erfindungsgemäßen Vorrichtung lassen sich nicht nur externe Lichteinflüsse, wie z.B. wechselndes Tageslicht, sondern auch alters-oder temperaturbedingte Schwankungen in der Helligkeit und/oder im Spektrum des von dem Leuchtmittel ausgestrahlten Lichts erfassen und Spektrum des von dem Leuchtmittel ausgestrahlten Lichts erfassen und durch entsprechendes Ansteuern des Leuchtmittels kompensieren. Auf diese Weise ist es grundsätzlich möglich, zu jeder Zeit gewünschte Lichtverhältnisse in dem durch das Leuchtmittel kontinuierlich ausgeleuchteten Raumbereich herzustellen, beispielsweise die Lichtverhältnisse an das jeweils herrschende Tageslicht abzustimmen oder je nach Nutzung des Raumbereiches besonders natürliche, kalte oder warme Lichtbedingungen zu schaffen. Sind mehrere Leuchtmittel zur Ausleuchtung eines größeren Raumes vorgesehen, so erleichtert es die erfindungsgemäße Vorrichtung außerdem, den Raum homogen auszuleuchten. Umgekehrt ermöglicht sie es selbstverständlich auch, verschiedene Bereiche des Raumes gemäß einem fest vorgegebenen oder variablen Ausleuchtungsplan gezielt unterschiedlich auszuleuchten.

Vorteilhafte Ausführungsformen der Erfindung sind den Unteransprüchen, der Beschreibung und den Zeichnungen zu entnehmen.

Gemäß einer Ausführungsform können die Helligkeit, die Farbtemperatur und/oder die Ausrichtung des Leuchtmittels steuerbar sein. Diese Parameter ermöglichen in besonders einfacher Weise die Einstellung gewünschter Lichtverhältnisse in dem ausgeleuchteten Raumbereich.

Ein besonders einfache Einstellung von Helligkeit und Farbtemperatur ist bei einem Leuchtmittel möglich, welches mehrere Lichtquellen, insbesondere Leuchtdioden (LEDs), aufweist, die bevorzugt Licht unterschiedlicher Wellenlängen emittieren. Das Leuchtmittel kann beispielsweise mehrere LEDs in unterschiedlichen Grundfarben aufweisen, zum Beispiel rote, grüne und blaue LEDs oder gelbe und blaue LEDs.

Die Helligkeit und das Spektrum des von einem derartigen Leuchtmittel ausgestrahlten Lichts lassen sich auf besonders einfache Weise dadurch variieren, dass die für die Zusammensetzung des gewünschten Spektrums jeweils benötigten farbigen LEDs mit entsprechender Helligkeit zum Leuchten gebracht werden.

Bevorzugt werden die LEDs zu diesem Zweck pulsweitenmoduliert angesteuert. Dabei kann die Helligkeit einer LED durch eine entsprechende Wahl des Tastverhältnisses des an die LED angelegten Stromversorgungssignals praktisch beliebig eingestellt werden. Weist das Leuchtmittel mehrere LEDs einer Farbe auf, so kann von der Steuereinheit auch ein Verhältnis von leuchtenden zu nicht-leuchtenden LEDs dieser Farbe festgelegt werden, um eine gewünschte Gesamthelligkeit sämtlicher LEDs dieser Farbe zu erzielen. Beide Varianten können außerdem verwendet werden, um die Helligkeit des Leuchtmittels insgesamt einzustellen.

Wie bereits erwähnt, dient die Erfassungseinrichtung zur Erfassung der Charakteristik vorhandenen Lichts an wenigstens einem Ort. Ein solcher Erfassungsort kann außerhalb des von dem Leuchtmittel ausgeleuchteten Raumbereiches liegen und sich zum Beispiel in der Nähe eines Fensters befinden, um die Charakteristik des jeweils herrschenden Tageslichts zu erfassen. Die erfasste Charakteristik des Tageslichts kann von der Steuereinheit als Soll-Charakteristik für das von dem Leuchtmittel ausgestrahlte Licht verwendet werden, um z.B. einen fensterlosen Raum oder einen von dem Fenster entfernten und von Natur aus dunkleren Bereich eines Raumes mit tageslichtähnlichem Licht auszuleuchten.

Alternativ oder zusätzlich kann ein Erfassungsort innerhalb des von dem Leuchtmittel ausgeleuchteten Raumbereiches liegen, sodass die Charakteristik des in dem Raumbereich herrschenden Lichts, insbesondere unter Berücksichtigung des von dem Leuchtmittel tatsächlich ausgestrahlten Lichts, erfassbar ist. Die so erfasste tatsächliche Lichtcharakteristik kann durch die Steuereinheit mit einer Soll-Charakteristik verglichen werden und zur Überprüfung der Funktion des Leuchtmittels herangezogen werden.

Befindet sich ein erster Erfassungsort außerhalb des von dem Leuchtmittel ausgeleuchteten Raumbereiches und ein zweiter Erfassungsort innerhalb des Raumbereiches, kann sowohl die Charakteristik z.B. des Tageslichts als auch die Charakteristik des von dem Leuchtmittel ausgestrahlten Lichts erfasst und zur Steuerung des Leuchtmittels verwendet werden.

Gemäß einer vorteilhaften Ausführungsform weist die Erfassungseinrichtung an jedem Erfassungsort einen eigenen Detektor zur Erfassung der Charakteristik des an dem jeweiligen Ort vorhandenen Lichts auf. Bevorzugt umfasst ein Detektor mindestens zwei Sensorelemente, die bezüglich unterschiedlicher Wellenlängenbereiche lichtempfindlich sind. Die zu einem Detektor gehörigen Sensorelemente können dabei in einem gemeinsamen Detektorgehäuse untergebracht sein.

Die mehreren Sensorelemente eines Detektors sind vorteilhafterweise bezüglich unterschiedlicher Grundfarben des auf sie auftreffenden Lichts empfindlich. Beispielsweise kann die maximale Empfindlichkeit eines ersten Sensorelements eines Detektors im roten Wellenlängenbereich, die maximale Empfindlichkeit eines zweiten Sensorelements im grünen Wellenlängenbereich und die maximale Empfindlichkeit eines dritten Sensorelements im blauen Wellenlängenbereich liegen. Alternativ kann die maximale Empfindlichkeit eines ersten Sensorelements auch im gelben Wellenlängenbereich und die maximale Empfindlichkeit eines zweiten Sensorelements im blauen Wellenlängenbereich liegen.

Zur Detektion einer Fehlfunktion des Leuchtmittels ist die Steuereinheit gemäß einer weiteren Ausführungsform dazu ausgebildet, anhand der von der Erfassungseinrichtung erfassten Lichtcharakteristik zu überprüfen, ob das Leuchtmittel bestimmungsgemäß arbeitet oder nicht, und eine für einen Benutzer wahrnehmbare Anzeige zu erzeugen, wenn das Leuchtmittel nicht bestimmungsgemäß arbeitet. Zur Beurteilung, ob das Leuchtmittel bestimmungsgemäß arbeitet oder nicht, kann die erfasste Lichtcharakteristik beispielsweise mit einer durch die Steuereinheit vorgegebenen Soll-Lichtcharakteristik des Leuchtmittels verglichen werden. Wie bereits erwähnt wurde, eignet sich für die Funktionsüberprüfung insbesondere eine von einem innerhalb des von dem Leuchtmittel ausgestrahlten Raumbereiches angeordneten Detektor erfasste Lichtcharakteristik. Zusätzlich können Umgebungseinflüsse, wie beispielsweise eine von einem weiteren, außerhalb des Raumbereiches angeordneten Detektor erfasste Tageslichtcharakteristik, in die Überprüfung eingehen.

Gemäß einer weiteren Ausführungsform ist die Vorrichtung Teil eines Gebäudemanagement-Systems. Die Vorrichtung kann in diesem Zusammenhang eine Vielzahl von Detektoren sowie eine Vielzahl von Leuchtmitteln umfassen, wobei sowohl die Leuchtmittel als auch die Detektoren in ein und demselben Raum und/oder in unterschiedlichen Räumen eines Gebäudes angeordnet sein können. Im Rahmen eines zentralen Beleuchtungsmanagements können auf diese Weise mehrere Leuchtmittel in einem Raum oder auch in unterschiedlichen Räumen durch eine gemeinsame Steuereinheit gesteuert werden. Die Steuereinheit kann dabei mehrere der Leuchtmittel in Abhängigkeit von einer durch einen einzigen Detektor erfassten Lichtcharakteristik oder auch in Abhängigkeit von Lichtcharakteristiken steuern, die von unterschiedlichen Detektoren erfasst werden. Auf diese Weise können zum Beispiel mehrere Leuchtmittel, die in ein und demselben Raum angeordnet sind, von der Steuereinheit so angesteuert werden, dass in dem gesamten Raum gleichmäßige Lichtverhältnisse herrschen.

Als Teil eines Gebäudemanagement-Systems kann die Steuereinheit mit einem Bussystem des Gebäudemanagement-Systems verbunden sein, welches zum Beispiel ein KNX-/LON-Bussystem umfassen kann. Die Detektoren und die Leuchtmittel der erfindungsgemäßen Vorrichtung können ebenfalls über ein solches Bussystem mit der Steuereinheit verbunden sein. In einem solchen Bussystem können sowohl die von der Erfassungsvorrichtung bzw. einem Detektor ermittelten Messsignale als auch die an die Leuchtmittel gesendeten Steuersignale auf ein und derselben Busleitung zu und von derselben Steuereinheit übertragen werden, so dass insbesondere der Verkabelungsaufwand für die von den Messungen der Erfassungsvorrichtung abhängige Steuerung der Leuchtmittel erheblich verringert wird. Durch die Verwendung des Bussystems wird dabei der für das Einbinden zusätzlicher Leuchtmittel und/oder Detektoren in das Gebäudemanagementsystem erforderliche Aufwand erheblich verringert, sodass mit geringem Aufwand ein jederzeit flexibel anpassbares und koordiniertes Beleuchtungsmanagement ermöglicht wird. Ferner kann die Steuereinheit eine verteilte Architektur aufweisen und ganz oder teilweise in einem Zentralrechner des Gebäudemanagement-Systems enthalten sein.

Weiterer Gegenstand der Erfindung ist ein Verfahren zum Steuern eines Leuchtmittels zur kontinuierlichen Ausstrahlung von Licht in einen Raumbereich, wobei das Verfahren das Erfassen der Charakteristik vorhandenen Lichts an wenigstens einem Ort und das Steuern des Leuchtmittels in Abhängigkeit von der erfassten Lichtcharakteristik umfasst. Die vorstehend beschriebenen Vorteile und Weiterbildungen gelten für dieses Verfahren entsprechend.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine schematische Ansicht einer erfindungsgemäßen Vorrichtung gemäß einer ersten Ausführungsform; und
- Fig. 2: eine schematische Ansicht einer erfindungsgemäßen Vorrichtung gemäß einer zweiten Ausführungsform.

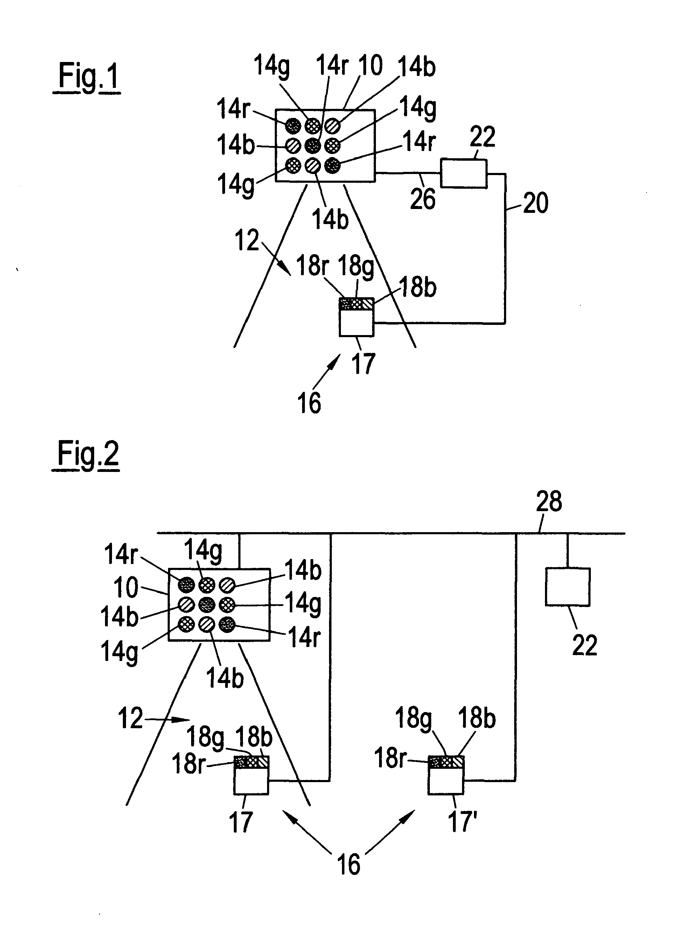

Fig. 1 zeigt eine erfindungsgemäße Vorrichtung mit einem Leuchtmittel 10 zur kontinuierlichen Ausstrahlung von Licht in einen Raumbereich 12. Das Leuchtmittel 10 kann Teil beispielsweise einer Schreibtisch-, Wand-oder Deckenbeleuchtung sein und umfasst einen Satz von LEDs 14, in dem mehrere rote LEDs 14r, mehrere grüne LEDs 14g und mehrere blaue LEDs 14b enthalten sind.

Die Vorrichtung weist ferner eine Erfassungseinrichtung 16 auf, die zur Erfassung der Charakteristik vorhandenen Lichts an einem Ort innerhalb des Raumbereiches 12 dient und zu diesem Zweck einen an diesem Ort angeordneten Detektor 17 mit mehreren optischen Sensorelementen 18 umfasst.

Dabei liegt die maximale Empfindlichkeit eines ersten Sensorelements 18r im roten Wellenlängenbereich, die maximale Empfindlichkeit eines zweiten Sensorelements 18g im grünen Wellenlängenbereich und die maximale Empfindlichkeit eines dritten Sensorelements 18b im blauen Wellenlängenbereich.

Jedes Sensorelement 18 liefert an seinem Ausgang ein von der Intensität des auf das Sensorelement 18 auftreffenden Lichts in dem jeweiligen Wellenlängenbereich abhängiges Ausgangssignal. Die Ausgangssignale der drei Sensorelemente 18 werden über drei in einer Leitung 20 zusammengefasste Signalpfade in eine Steuereinheit 22 der Vorrichtung eingespeist.

Die Steuereinheit 22 empfängt die von dem Detektor 17 gelieferten Signale und ermittelt daraus die Intensität des am Detektor 17 vorhandenen Lichts jeweils im roten, grünen und blauen Spektralbereich, um so eine Information über die Helligkeit und das Spektrum des an dem Ort des Detektors 17 vorhandenen Lichts zu gewinnen.

Die Steuereinheit 22 ist über eine Leitung 26 mit dem Leuchtmittel 10 verbunden und steuert dieses in Abhängigkeit von der Charakteristik des von dem Detektor 17 erfassten Lichts an, um in dem Raumbereich 12 gewünschte Lichtverhältnisse herzustellen. Hierzu sind in der Steuereinheit 22 eine oder mehrere Soll-Lichtcharakteristiken hinterlegt, die die gewünschten Lichtverhältnisse repräsentieren.

Die Steuereinheit 22 führt eine Regelungsfunktion durch, deren Regelgröße die Charakteristik des Lichts in dem Raumbereich 12 ist. Dabei wird ein Ist-Wert der Regelgröße aus der von dem Detektor 17 erfassten, tatsächlichen Lichtcharakteristik abgeleitet. Ein Soll-Wert der Regelgröße wird aus einer in der Steuereinheit 22 hinterlegten Soll-Lichtcharakteristik abgeleitet.

Im vorliegenden Ausführungsbeispiel gehen konkret die von dem Detektor 17 erfassten Intensitätswerte des Lichts im roten, grünen und blauen Spektralbereich jeweils als Ist-Wert in die Regelungsfunktion ein. Entsprechend dienen einer Soll-Lichtcharakteristik entsprechende Werte der Lichtintensität im roten, grünen und blauen Spektralbereich als Soll-Werte der Regelung. Aus dem Vergleich von Ist- und Soll-Werten leitet die Regelungsfunktion Steuergrößen für das Leuchtmittel 10 ab, beispielsweise Tastverhältnisse der Spannungssignale, mit denen die roten, grünen und blauen LEDs 14 jeweils beaufschlagt werden.

Fig. 2 zeigt eine erfindungsgemäße Vorrichtung gemäß einer zweiten Ausführungsform.

Die Vorrichtung von Fig. 2 unterscheidet sich unter anderem darin von der in Fig. 1 gezeigten Vorrichtung , dass zusätzlich zu dem innerhalb des Raumbereiches 12 angeordneten Detektor 17 noch ein außerhalb des Raumbereiches 12 angeordneter zweiter Detektor 17' vorhanden ist, welcher an einem Tageslicht ausgesetzten Ort, beispielsweise an einem Fenster, angeordnet ist. Abgesehen von seiner örtlichen Anordnung entspricht der zweite Detektor 17' dem im Raumbereich 12 angeordneten Detektor 17.

Die Steuereinheit 22 empfängt die Ausgangssignale beider Detektoren 17, 17'. Zur Herstellung gewünschter Lichtverhältnisse in dem Raumbereich 12 führt die Steuereinheit 22 eine Regelung durch, die im Wesentlichen der voranstehend im Zusammenhang mit der ersten Ausführungsform beschriebenen Regelung entspricht.

Die Regelung gemäß zweiter Ausführungsform unterscheidet sich von der Regelung gemäß erster Ausführungsform lediglich dadurch, dass in diesem Fall nicht eine in Steuereinheit 22 hinterlegte Lichtcharakteristik, sondern die durch den Detektor 17' erfasste Charakteristik des Tageslichts als Soll-Lichtcharakteristik verwendet wird. Entsprechend werden die Soll-Werte der Regelung aus der durch den zweiten Detektor 17' erfassten Lichtcharakteristik ermittelt, um das Spektrum des Lichts in dem Raumbereich 12 an das Tageslicht anzupassen.

Wie in Fig. 2 außerdem gezeigt ist, stehen das Leuchtmittel 10, die Detektoren 17, 17' und die Steuereinheit 22 gemäß zweiter Ausführungsform über ein Bussystem 28 eines Gebäudemanagement-Systems miteinander in Verbindung.

Neben dem dargestellten Leuchtmittel 10 und den Detektoren 17, 17' können weitere Leuchtmittel 10 und Detektoren 17, 17' über das Bussystem 28 mit der Steuereinheit 22 verbunden sein, sodass eine Mehrzahl von Leuchtmitteln 10 durch die Steuereinheit 22 gesteuert werden kann.

### Bezugszeichenliste

- 10: Leuchtmittel
- 12: Raumbereich
- 14: LED
- 16: Erfassungseinrichtung
- 17, 17': Detektor
- 18: Sensorelement
- 20: Leitung
- 22: Steuereinheit
- 26: Leitung
- 28: Bussystem

## Patentansprüche

1. Vorrichtung umfassend
ein Leuchtmittel (10) zur kontinuierlichen Ausstrahlung von Licht in einen Raumbereich (12),
eine Erfassungseinrichtung (16) zur Erfassung der Charakteristik vorhandenen Lichts an wenigstens einem Ort und
eine mit der Erfassungseinrichtung (16) verbundene Steuereinheit (22) zur Steuerung des Leuchtmittels (10) in Abhängigkeit von der erfassten Lichtcharakteristik.

2. Vorrichtung nach Anspruch 1,
**dadurch gekennzeichnet,dass**
die Steuereinheit (22) dazu ausgebildet ist, anhand der erfassten Lichtcharakteristik zu überprüfen, ob das Leuchtmittel (10) bestimmungsgemäß arbeitet, und eine für einen Benutzer wahrnehmbare Anzeige zu erzeugen, wenn das Leuchtmittel (10) nicht bestimmungsgemäß arbeitet.

3. Vorrichtung nach Anspruch 1 oder 2,
**dadurch gekennzeichnet, dass**
die Vorrichtung in ein Gebäudemanagement-Systems integriert ist, wobei die Erfassungseinrichtung (16) über ein Bussystem (28) des Gebäudemanagement-Systems mit der Steuereinheit (22) verbunden ist und die Steuereinheit (22) zur Steuerung des Leuchtmittels (10) über das Bussystem (28) mit dem Leuchtmittel (10) verbunden ist.

4. Vorrichtung nach zumindest einem der vorstehenden Ansprüche,
**dadurch gekennzeichnet, dass**
das Leuchtmittel (10) derart steuerbar ist, dass in dem Raumbereich (12) gewünschte Lichtverhältnisse herstellbar sind.

5. Vorrichtung nach zumindest einem der vorstehenden Ansprüche,
**dadurch gekennzeichnet, dass**
dass die Helligkeit, Farbtemperatur und/oder Ausrichtung des Leuchtmittels (12) steuerbar ist.

6. Vorrichtung nach zumindest einem der vorstehenden Ansprüche,
**dadurch gekennzeichnet, dass**
dass das Leuchtmittel (12) mehrere Lichtquellen, insbesondere Leuchtdioden (14), aufweist, die bevorzugt Licht unterschiedlicher Wellenlängen emittieren.

7. Vorrichtung nach zumindest einem der vorstehenden Ansprüche,
**dadurch gekennzeichnet, dass**
der Ort der Erfassung der Lichtcharakteristik außerhalb des Raumbereiches (12) liegt.

8. Vorrichtung nach zumindest einem der Ansprüche 1 bis 6,
**dadurch gekennzeichnet, dass**
der Ort der Erfassung der Lichtcharakteristik innerhalb des Raumbereiches (12) liegt.

9. Vorrichtung nach zumindest einem der Ansprüche 1 bis 6,
**dadurch gekennzeichnet, dass**
ein erster Ort der Erfassung der Lichtcharakteristik außerhalb des Raumbereiches (12) und ein zweiter Ort der Erfassung der Lichtcharakteristik innerhalb des Raumbereiches (12) liegen.

10. Vorrichtung nach zumindest einem der vorstehenden Ansprüche,
**dadurch gekennzeichnet, dass**
die Erfassungseinrichtung (16) einen Detektor (17) zur Erfassung der Lichtcharakteristik an jedem Erfassungsort aufweist.

11. Vorrichtung nach Anspruch 10,
**dadurch gekennzeichnet, dass**
der oder jeder Detektor (17) mindestens zwei Sensorelemente (18) umfasst, die bezüglich unterschiedlicher Wellenlängenbereiche lichtempfindlich sind.

12. Vorrichtung nach Anspruch 11,
**dadurch gekennzeichnet, dass**
die maximale Empfindlichkeit eines ersten Sensorelements (18r) im roten Wellenlängenbereich, die maximale Empfindlichkeit eines zweiten Sensorelements (18g) im grünen Wellenlängenbereich und die maximale Empfindlichkeit eines dritten Sensorelements (18b) im blauen Wellenlängenbereich liegt.

13. Verfahren zum Steuern eines Leuchtmittels (10) zur kontinuierlichen Ausstrahlung von Licht in einen Raumbereich (12), welches umfasst:
Erfassen der Charakteristik vorhandenen Lichts an wenigstens einem Ort und
Steuern des Leuchtmittels (10) in Abhängigkeit von der erfassten Lichtcharakteristik.

14. Verfahren nach Anspruch 13,
**dadurch gekennzeichnet, dass**
anhand der erfassten Charakteristik überprüft wird, ob das Leuchtmittel (10) bestimmungsgemäß arbeitet, und eine für einen Benutzer wahrnehmbare Anzeige erzeugt wird, wenn das Leuchtmittel (10) nicht bestimmungsgemäß arbeitet.
